# EUROPÄISCHE PATENTSCHRIFT

(11) **EP 2 894 412 B1**
(45) Veröffentlichungstag und Bekanntmachung des Hinweises auf die Patenterteilung: **23.08.2017**
(21) Anmeldenummer: 15150743.1
(22) Anmeldetag: 12.01.2015
(51) Int. Cl.: F24F 5/00, F24F 11/00, F24F 12/00, F24F 7/00

(54) **Lüftungsgerät zur Innenraumbelüftung in Gebäuden**
Ventilating device for ventilating the interior of buildings
Appareil d'aération destiné à l'aération intérieure de bâtiments

(30) Priorität: 14.01.2014 DE 102014200538; 14.01.2014 DE 202014003368 U
(43) Veröffentlichungstag der Anmeldung: 15.07.2015
(73) Patentinhaber: LUNOS Lüftungstechnik GmbH für Raumluftsysteme, 13593 Berlin (DE)
(72) Erfinder:
(74) Vertreter: Eisenführ Speiser

(56) Entgegenhaltungen:
- EP-A2- 0 196 175
- DE-A1-102011 080 358
- DE-U1-202009 017 449
- US-A- 5 050 667

## Beschreibung

Die Erfindung betrifft ein Lüftungsgerät zur Innenraumbelüftung in Gebäuden.

Im Zuge von Energiesparmaßnahmen wird eine effiziente Belüftung von Räumen wie beispielsweise Wohnräumen oder Büroräumen zunehmend wichtig. Durch Öffnen eines Fensters kann zwar ein Luftaustausch mit der Außenluft erreicht werden, hierbei entweicht bei eingeschalteter Heizung oder Klimaanlage jedoch auch eine große Menge von Wärmeenergie aus dem Fenster bzw. es strömt warme Luft in den gekühlten Innenraum. Hierdurch geht ein erheblicher Teil der für das Heizen oder Kühlen aufgewendeten Energie verloren. Außerdem ist ein geöffnetes Fenster immer mit einer erhöhten Einbruchgefahr verbunden.

Deshalb wurden bereits Systeme entwickelt, mit welchen bei der Lüftung eines Raums dezentral Wärme rückgewonnen werden kann. Unter "dezentral" ist dabei die Unabhängigkeit von einem installierten Heizungs- oder Kühlsystem zu verstehen. Gängige Systeme benötigen jedoch aufgrund der notwendigen Wärmespeicher viel Platz und ragen in den Raum herein. Außerdem sind zur Installation solcher Systeme häufig umfangreiche Baumaßnahmen nötig.

In DE 10 2011 080 358 ist ein System beschrieben, welches Wärmetauscher zur Wärmerückgewinnung nutzt und platzsparend eingebaut werden kann. Zur gleichmäßigen Be- und Entlüftung ist in DE10 2011 080 358 die Verwendung zweier Einbauprofile beschrieben, die alternierend betrieben werden. US 5 050 667 A1 offenbart ein Lüftungsgerät mit den Merkmalen des Oberbegriffs von Anspruch 1. Erfindungsgemäß wird ein neues Lüftungsgerät zur Innenraumbelüftung mit den Merkmalen von Anspruch 1 vorgeschlagen. Bevorzugte Ausführungsformen des Lüftungsgerätes sind in den abhängigen Ansprüchen definiert.

Die Lüftungseinrichtung umfasst in einem gemeinsamen Gehäuse
- eine erste Luftführungseinrichtung zur Führung eines ersten Luftstroms, die einen ersten innenraumseitigen Auslass, einen ersten Strömungsraum, in welchem wenigstens ein erster bidirektional betreibbarer Ventilator angeordnet ist, und einen ersten außenseitigen Auslass aufweist,
- eine von der ersten Luftführungseinrichtung fluidisch vollständig getrennte zweite Luftführungseinrichtung zur Führung eines zweiten Luftstroms, die einen zweiten innenraumseitigen Auslass, einen zweiten Strömungsraum, in welchem wenigstens ein zweiter bidirektional betreibbarer Ventilator angeordnet ist, und einen zweiten außenseitigen Auslass aufweist,
- einen einstückigen Gas-Festkörper-Wärmetauscher, dessen Festkörper sich in der ersten und in der zweiten Luftführungseinrichtung erstreckt, in beiden Luftführungseinrichtungen zwischen dem jeweiligen innenraumseitigen und dem außenseitigen Auslass angeordnet ist, eine Vielzahl von Kanälen aufweist und ausgebildet ist, den ersten Luftstrom den zweiten Luftstrom in einer jeweiligen Teilmenge von Kanälen fluidisch getrennt, jedoch thermisch gekoppelt zu führen, wobei der Festkörper in der ersten und der zweiten Luftführungseinrichtung jeweils zusätzlich einen Regenerator bildet,
- wobei der erste und der zweite innenraumseitige Auslass in einem gemeinsamen innenraumseitigen Teilgehäuse angeordnet sind sowie der erste und der zweite außenseitige Auslass in einem gemeinsamen außenseitigen Teilgehäuse angeordnet sind, und
- wobei der erste und der zweite Strömungsraum sowie der Gas-Festkörper-Wärmetauscher in einem gemeinsamen Mittelteil des Gehäuses angeordnet sind.

Das erfindungsgemäße Lüftungsgerät ermöglicht es, gegenüber vorbekannten Lösungen die Effizienz der Wärmerückgewinnung zu steigern und gleichzeitig den Platzbedarf weiter zu verringern.

Die Integration beider Luftführungseinrichtungen in ein gemeinsames Gehäuse und unter gemeinsamer Nutzung eines einstückigen Gas-Festkörper-Wärmetauschers stellt geringere Anforderungen an den Platzbedarf als dies die aus dem Stand der Technik bekannten Lüftungsgeräte tun, insbesondere, da nur noch ein Wärmetauscher genutzt wird. Außerdem erlaubt das erfindungsgemäße Lüftungsgerät die Installation von gleichzeitiger Be- und Entlüftung in einem Wanddurchbruch, was die Installation erheblich vereinfacht.

Der Gas-Festkörper-Wärmetauscher des erfindungsgemäßen Lüftungsgerätes erhöht hinaus die Effizienz der Wärmerückgewinnung, da er im Unterschied zu Wärmetauschern herkömmlicher Lüftungsgeräte einerseits in der Lage ist, in an sich bekannter Weise Wärme zu regenerieren, indem er in der Lage ist, Wärme aus einem Luftstrom zwischenzuspeichern und an einen gegenläufigen Luftstrom wieder abzugeben, aber darüberhinaus auch in der Lage ist, Wärme vom ersten Luftstrom an den zweiten Luftstrom oder vom zweiten Luftstrom an den ersten Luftstrom zu übertragen.

Die vorliegende Beschreibung verwendet zwar nur den Begriff "Auslass". Darunter soll jedoch allgemein eine durchströmbare Öffnung verstanden werden. Sowohl der erste und zweite innenraumseitige Auslass als auch der erste und zweite außenseitige Auslass werden im Betrieb abhängig von der Drehrichtung des jeweiligen bidirektional betreibbaren Ventilators jeweils in einer von zwei möglichen und entgegengesetzten Richtungen durchströmt. Sie fungieren also wahlweise entweder als Einlass oder als Auslass für Luft. Durch die beschriebenen Auslässe kann die Luft also je nach Drehrichtung in das Lüftungsgerät hinein oder aus diesem heraus strömen.

In einer vorteilhaften Ausführungsform sind der erste innenraumseitige Auslass und der zweite innenraumseitige Auslass seitlich auf einander gegenüberliegenden Seiten des innenraumseitigen Teilgehäuses angeordnet. Bei dieser Ausführungsform treten der erste und der zweite Luftstrom aus dem jeweiligen Auslass parallel oder antiparallel ein oder aus, je nach Strömungsrichtung, die erste und zweite Luftstrom sind dabei fluidisch im innenraumseitigen Teilgehäuse vollständig getrennt. Die Anordnung der innenraumseitigen Auslässe ermöglicht eine zusätzliche räumliche Trennung der Luftströme beim Übergang zwischen Innenraum und Lüftungsgerät. In einem Gegenstrombetrieb wird so die abgesaugte Luft in einem Abstand zu frisch eingeströmten Luft angesaugt, so dass eine Vermischung von beiden Luftströmen vermieden wird.

In einer bevorzugten Ausführungsform sind der erste außenseitige Auslass und der zweite außenseitige Auslass seitlich auf einander gegenüberliegenden Seiten des außenseitigen Teilgehäuses angeordnet. In dieser Ausführung wird ein Wiedereinsaugen der gerade aus dem Innenraum abgeführten Luft durch den sich ergebenden Abstand zwischen dem ersten und dem zweiten außenseitigen Auslass vermieden.

Bevorzugt weist das Lüftungsgerät in einer Ausführungsform im Gehäuse unmittelbar angrenzend an den Festkörper angeordnet mindestens eine Dichtung auf, die für den ersten Luftstrom eine erste Durchflussöffnung aufweist, welche eine erste Teilmenge von Kanälen des Festkörpers freilegt, und die für den zweiten Luftstrom eine zweite Durchflussöffnung aufweist, welche eine zweite Teilmenge von Kanälen des Festkörpers freilegt. Eine solche Dichtung ist zum einen in der Lage nach außen abzudichten und sorgt darüber hinaus dafür, dass auch direkt am Übergang der Luftströme in den Festkörper des Wärmetauschers die fluidische Trennung des ersten und zweiten Luftstromes voneinander zusätzlich abgesichert wird.

Der erste oder der zweite Ventilator oder der erste und der zweite Ventilator weist in einer weiteren Ausführungsform ein um eine Drehachse rotierbares Ventilatorrad auf, wobei die Drehachse schräg steht zu einer Längsausrichtung der Kanäle des Festkörpers. Hierdurch wird der Luftstrom vor dem Eintritt in den Wärmetauscher zusätzlich verwirbelt, so dass der Wärmetauscher gleichmäßiger angeströmt werden kann. Eine solche Ventilatoranordnung führt auch zu einem niedrigen Stromverbrauch des Ventilators. Insbesondere ist es hierbei vorteilhaft, wenn die jeweilige Drehachse des Ventilatorrades um einen Winkel zwischen 30° und 60° in Relation zu einer Längsausrichtung der Kanäle des Festkörpers gedreht ist.

Bevorzugt ist der erste oder der zweite Ventilator oder der erste und der zweite Ventilator ein Axialventilator. Aber auch ein Radialventilator kann verwendet werden.

Der Axialventilator weist in einer weiteren Ausführungsform ein Ventilatorrad auf, dessen äußerer Umfang in mindestens einer senkrecht zur Achse des Ventilators stehenden Ebene durch einen Kreis beschreibbar ist und bei dem zwischen dem Ventilator und dem Festkörper ein Vergleichsmäßigungsabstand eingehalten ist, der mit einer Abweichung von maximal 20 % gleich dem Radius des Kreises ist. Bevorzugt liegt die Abweichung in einem Bereich kleiner 10 %. Besonders vorteilhaft entspricht der Vergleichmäßigungsabstand genau dem Radius des Kreises.

Durch den Vergleichmäßigungsabstand, welchen der Ventilator zum Wärmetauscherfestkörper einhält, wird erreicht, dass ein durch den Ventilator erzeugter Luftstrom gleichmäßig durch das Wärmetauschermaterial geht. Totzonen von Ventilatoren - bei Axialventilatoren regelmäßig um den Drehpunkt angeordnete Zonen und bei Radialventilatoren aufgrund des Aufbaus - wirken dann nicht mehr derart, dass eine ausreichende Anströmung auf das Wärmetauschermaterial verhindert wird. Stattdessen ist es möglich, dass auch in Bereichen, welche bei einem unmittelbar an das Wärmetauschermaterial angrenzenden Ventilator aufgrund einer Totzone des Ventilators nicht ausreichend durchströmt sind, eine Wärmeaufladung bzw. Wärmerückführung erfolgt. Das sonst auftretende Problem schlechter Wirkungsgrade wird vermieden. Mit dem Konzept des Vergleichmäßigungsabstandes werden zusammenfassend Totzonen vermieden und der Wirkungsgrad erheblich verbessert.

Ohne Vergleichmäßigungsabstand bläst beispielsweise ein Axiallüfter ungleichmäßig in den Wärmetauscher hinein. Ein Außenbereich der Querschnittsfläche wird deutlich stärker durchströmt als ein zentraler Bereich der Querschnittslfäche. Dadurch wird der zentrale Bereich nicht ausreichend mit warmer Luft vorgewärmt. Beim zweiten Zyklus, also beim Hindurchsaugen von Außenluft, wird zwar der Wärmetauscher gleichmäßig durchströmt. Im zentralen Bereich der Querschnittsfläche des Wärmetauschers wird aber nun kältere Luft einströmen, weil in diesem Bereich nur wenig gespeicherte Wärmeenergie vorhanden ist. Auf diese Weise leidet der Wirkungsgrad des Wärmetauschers als Ganzes. Durch Vorsehen des Vergleichmäßigungsabstands dagegen wird der Luftstrom des Lüfters so verwirbelt und gebrochen, dass auch beim ersten Zyklus die Luft gleichmäßig im Außenbereich wie im zentralen Bereich durch den Wärmetauscher strömt und diese gleichmäßig erwärmt wird, um im zweiten Zyklus entsprechend gleichmäßig im äußeren wie im zentralen Bereich Wärme an einströmende Außenluft abgeben zu können.

Der Festkörper des Gas-Festkörper-Wärmetauschers ist in einer bevorzugten Ausführungsform aus Keramik. Insbesondere Silikatkeramik, wie Tonerdeporzellan oder Cordierit ist ein geeignetes Material für den Festkörper. Diese Keramiken verfügen über eine ausreichende Wärmeleitfähigkeit und eine hohe spezifische Wärmekapazität.

Die Vielzahl von Kanälen des Festkörpers weist bevorzugt eine wabenartige Struktur, insbesondere einen hexagonalen Querschnitt auf. Solche wabenartigen Strukturen zeichnen sich durch eine verbesserte Festigkeit aus. Aber auch runde oder rechteckige Querschnitte der Kanäle sind möglich.

Das Lüftungsgerät weist erfindungsgemäß im Gehäuse eine elektronische Steuereinheit auf, die ausgebildet ist, auf den Empfang eines Steuersignals hin den ersten oder den zweiten Ventilator in einer durch das Steuersignal definierten Drehzahl und Drehrichtung in Betrieb zu setzen. Das Steuersignal kann dabei sowohl direkt am Lüftungsgerät beispielsweise durch eine Nutzereingabe erzeugt werden, aber auch der Empfang des Steuersignals beispielsweise von einer zentralen Steuerungseinrichtung ist möglich. Dieses kann sowohl über eine Verkabelung als auch über drahtlose Vermittlung erfolgen. Unterschiedliche Drehzahlen der Ventilatoren entsprechen dabei unterschiedlichen Volumenströmen des jeweiligen Luftstroms.

Die Steuereinheit ist ausgebildet, auf den Empfang eines entsprechenden Steuersignals hin den ersten und den zweiten Ventilator in einem Gegentaktbetrieb mit entgegengesetzter Drehrichtung zu betreiben. Die Ventilatoren in dem dezentralen Lüftungsgerät laufen somit gleichzeitig in entgegengesetzter Drehrichtung (Gegentaktbetrieb), d.h. ein Ventilator fördert Außenluft in den Aufstellraum des Gerätes, also den Innenraum, während der andere Ventilator die Abluft aus dem Aufstellraum ins Freie, also nach außen fördert. Im Entlüftungstakt wird dem Abluftvolumenstorm durch den Wärmetauscher Wärmeenergie entzogen. Diese Wärmeenergie wird im Belüftungstakt wieder an die Zuluft abgegeben. Es erfolgt während dieser Phase eine regenerative Wärmeübertragung, wodurch die Außenluft erwärmt und als Zuluft dem Raum zugeführt wird. Darüberhinaus findet auch eine Wärmeübertragung zwischen dem gleichzeitigen Abluft- und Zuluftstrom statt. Zusätzlich wird durch die Drehrichtungsumkehr ein Kondensatanfall vermieden. Erfindungsgemäß ist die Steuereinheit ausgebildet, auf den Empfang eines entsprechenden Steuersignals hin die Drehrichtung des ersten und des zweiten Ventilators nach einer vorbestimmten Taktzeit umzukehren. Die Taktzeit für die Drehrichtungsänderung des Ventilators jeder Luftführungseinrichtung beträgt bevorzugt ca. 50 Sekunden.

Das Lüftungsgerät ist auch in einer sogenannten Sommerlüftung betreibbar, bei der die Wärmerückgewinnung wegen der geringen Temperaturunterschiede zwischen Innenraum und Umgebung in den Hintergrund tritt. Dabei erfolgt keine Drehrichtungsumkehr und beide Ventilatoren verharren dauerhaft in einer Drehrichtung. D.h. während ein Lüfter nach außen lüftet, lüftet der andere Lüfter entsprechend zu. Dadurch wird kein Unter- oder Überdruck erzeugt. Darüberhinaus spart dieser Modus Energie. Weiterhin ist die Steuereinheit ausgebildet, auf den Empfang eines entsprechenden Steuersignals hin den ersten und den zweiten Ventilator in einem Gleichtaktbetrieb mit gleicher Drehrichtung zu betreiben. Das Lüftungsgerät kann neben dem Betrieb mit Wärmerückgewinnungssystem somit auch als reines Ab- oder Zuluftsystem betrieben werden (z.B. zum schnellen Entlüften von Bädern, WCs oder Küchen), wobei einer oder beide Ventilatoren in Ab- oder Zuluftstellung fahren. Dabei wird der Ab- oder Zuluftvolumenstrom entsprechend vergrößert.

In einer bevorzugten Ausführungsform des Lüftungsgerätes, ist das Mittelteil des Gehäuse als Rohr ausgebildet. Das Rohr dient dabei als Mauerhülse für den Außenwandeinbau. Die Einbautiefe des Lüftungsgerätes ist bevorzugt variabel und kann in einem Bereich von 300 mm bis 500 mm an die entsprechende Wandstärke angepasst werden.

Bevorzugt ist zwischen dem ersten oder dem zweiten oder dem ersten und zweiten innenraumseitigen Auslass und dem jeweiligen Ventilator ein Filter angeordnet, insbesondere ist hier ein Filterschaum bevorzugt.

Im Gegentaktbetrieb sind über die Steuereinheit beispielsweise Volumenströme zwischen Innenraum und außen von 5, 10, 15 und 20m³/h einstellbar. Im Gleichtaktbetrieb sind beispielsweise Volumenströme von 10, 20, 30 und 45m³/h einstellbar. 45m³/h werden dadurch erreicht, dass im Regelfall Gegentaktbetrieb nicht mit 100 % der Leistung eines Motors des Ventilators gearbeitet wird und diese "Reserve" für den Ab- und Zuluftbetrieb genutzt wird.

Vorteilhaft erfolgt ein Einbau des Lüftungsgerätes in eine Außenwand mit leichtem Gefälle nach außen (1-3° Neigung). Durch das Gefälle beim Geräteeinbau wird evtl. auftretendes Kondensat sicher nach außen abgeführt.

Um das Lüftungsgerät verschließen zu können (z.B. im Falle eines Chemieunfalles und der Ansage "bitte Fenster und Türen schließen"), ist das Lüftungsgerät mit magnetischen Verschlussfolien ausgestattet. Die innenraumseitigen Auslässe sind mit einem wabenförmigen Schutzgitter versehen, so dass ein direkter Eingriff in das Gerät verhindert wird. Die magnetischen Verschlussfolien können sowohl von innen (auf der dem Innenraum abwandten Seite des Schutzgitters) als auch von außen (auf der dem Innenraum zugewandten Seite des Schutzgitters) magnetisch an dem Schutzgitter befestigt werden. Durch die Haftkraft liegt die Folie am Gitter an und dichtet so jede Geräteseite komplett gegen die Außenluft ab.

Ausführungsbeispiele sind auch den Ansprüchen zu entnehmen.

Nachfolgend werden weitere Ausführungsbeispiele des Lüftungsgeräts anhand der Zeichnungen beschrieben. Es zeigen:
Fig. 1 Eine schematische Darstellung eines Ausführungsbeispiels eines Lüftungsgerätes zur Innenraumbelüftung gemäß der Erfindung in einer Schnittdarstellung;
Fig. 2 Eine schematische Darstellung des in Fig. 1 gezeigten Ausführungsbeispiels in einer Schnittansicht senkrecht zum Schnitt in Fig. 1;
Fig. 3 Eine perspektivische Darstellung des Ausführungsbeispiels des Lüftungsgerätes aus Fig. 1 und Fig. 2;
Fig. 4 Ein weiteres Ausführungsbeispiel eines Lüftungsgerätes zur Innenraumbelüftung gemäß der Erfindung in einer Explosionsdarstellung.

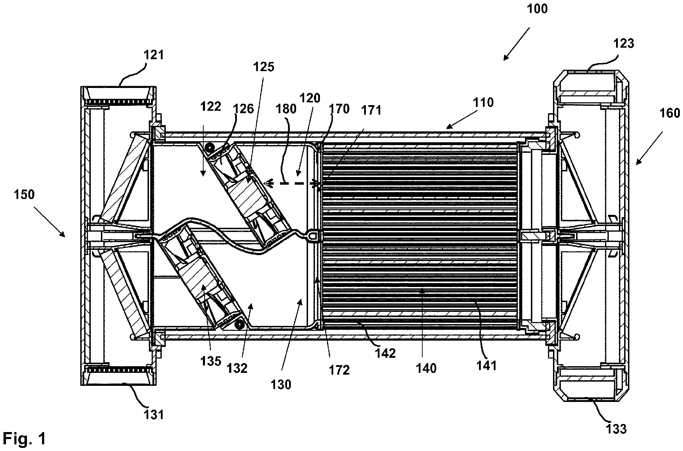

Fig. 1 zeigt in einer schematischen Schnittdarstellung ein Lüftungsgerät 100 zur Innenraumbelüftung mit einem gemeinsamen Gehäuse 110, in dem eine erste Luftführungseinrichtung 120 und eine von der ersten Luftführungseinrichtung 120 fluidisch vollständig getrennte zweite Luftführungseinrichtung 130 angeordnet sind. Die erste Luftführungseinrichtung 120 weist einen ersten innenraumseitigen Auslass 121, einen ersten Strömungsraum 122, in dem wenigstens ein erster bidirektional betreibbarer Ventilator 125 angeordnet ist, und einen ersten außenseitigen Auslass 123 auf. Die zweite Luftführungseinrichtung 130 weist ebenfalls einen zweiten innenraumseitigen Auslass 131, einen zweiten Strömungsraum 132 mit einem zweiten bidirektional betreibbaren Ventilator 135 und einem zweiten außenseitigen Auslass 133 auf.

Darüberhinaus ist ein einstückiger Gas-Festkörper-Wärmetauscher 140 in dem gemeinsamen Gehäuse 110 angeordnet. Der Festkörper 141 des Gas-Festkörper-Wärmetauschers erstreckt sich in der ersten und in der zweiten Luftführungseinrichtung 120, 130 und ist in beiden Luftführungseinrichtungen zwischen dem jeweiligen innenraumseitigen 121, 131 und dem außenseitigen Auslass 123, 133 angeordnet. Der Festkörper 141 weist eine Vielzahl von Kanälen 142 auf. Der Festkörper 141 ist ausgebildet, einen ersten Luftstrom, der in der ersten Luftführungseinrichtung 120 geführt wird und einen zweiten Luftstrom, der in der zweiten Luftführungseinrichtung 130 geführt wird, in einer jeweiligen Teilmenge von Kanälen 142 fluidisch getrennt, jedoch thermisch gekoppelt zu führen. Der Festkörper 141 bildet dabei in der ersten und in der zweiten Luftführungseinrichtung 120, 130 jeweils zusätzlich einen Regenerator. Der erste und der zweite Strömungsraum 122, 132 sowie der Gas-Festkörper-Wärmetauscher 140 sind in einem gemeinsamen Mittelteil des Gehäuses 110 angeordnet. Der erste und der zweite innenraumseitige Auslass 121, 131 sind fluidisch vollständig getrennt in einem gemeinsamen innenraumseitigen Teilgehäuse 150 angeordnet. Auch der erste und der zweite außenseitige Auslass 123, 133 sind fluidisch vollständig getrennt in einem gemeinsamen außenseitigen Teilgehäuse 160 angeordnet.

In der gezeigten Ausführungsform des Lüftungsgerätes 100 liegt der erste innenraumseitige Auslass 121 und der zweite innenraumseitige Auslass 131 seitlich aufeinander gegenüberliegenden Seiten des innenraumseitigen Teilgehäuses 150. Des Weiteren liegen auch der erste außenseitige Auslass 123 und der zweite außenseitige Auslass 133 seitlich aufeinander gegenüberliegenden Seiten des außenseitigen Teilgehäuses 160. Diese Anordnung der ersten und zweiten Auslässe aufeinander gegenüberliegenden Seiten der jeweiligen Teilgehäuse ermöglicht insbesondere in einem Gegenstrombetrieb, dass Frischluft räumlich getrennt von der Absaugung eingeblasen wird. Hiermit wird eine Vermischung von gegenläufigen Luftströmen vermieden. Auch eine andere Anordnung der jeweiligen ersten und zweiten Auslässe zueinander ist denkbar, insbesondere um Rücksicht auf bauliche Gegebenheiten in der Einbausituation des Lüftungsgerätes zu nehmen. In der gezeigten Ausführungsform weist das Lüftungsgerät 100 im Gehäuse 110 unmittelbar angrenzend an den Festkörper 141 des Gas-Festkörper-Wärmetauschers 140 eine Dichtung 170 auf, die eine erste Durchflussöffnung 171 aufweist, die eine erste Teilmenge von Kanälen des Festkörpers freilegt und die eine zweite Durchflussöffnung 172 aufweist, die eine zweite Teilmenge von Kanälen des Festkörpers freilegt. Mit dieser Dichtung wird die fluidische Trennung des ersten und zweiten Luftstroms in der ersten Luftführungseinrichtung 120 und in der zweiten Luftführungseinrichtung 130 zusätzlich abgesichert.

In der gezeigten Ausführungsform weisen der erste und der zweite Ventilator 125, 135 ein um eine Drehachse rotierbares Ventilatorrad 126, 136 auf, wobei die Drehachse jeweils schräg zu einer Längsausrichtung der Kanäle 142 des Festkörpers steht. Mithilfe dieser Anordnung wird der Luftstrom vor dem Eintritt in den Wärmetauscher zusätzlich verwirbelt, so dass der Wärmetauscher 140 gleichmäßiger angeströmt werden kann. Darüberhinaus führt eine solche Ventilatoranordnung auch zu einem niedrigeren Stromverbrauch des Ventilators. In der gezeigten Ausführungsform bildet die Drehachse einen Winkel von 40° mit der Längsausrichtung der Kanäle 142 des Festkörpers. In weiteren Ausführungsformen beträgt der Winkel zwischen der Drehachse des Ventilatorrades 126, 136 und der Längsausrichtung der Kanäle 142 vorteilhaft einen Winkel zwischen 30° und 60°. In der gezeigten Ausführungsform handelt es sich bei den Ventilatoren 125, 135 um Axialventilatoren. Aber auch ein Radialventilator kann in weiteren Ausführungsformen der Erfindung eingesetzt werden.

Der Ventilator 125 in der ersten Luftführungseinrichtung 120 ist in der gezeigten Ausführungsform in einem Vergleichmäßigungsabstand 180 vom Festkörper angeordnet. Dieser Vergleichmäßigungsabstand dient dem gleichmäßigen Anströmen des Wärmetauschermaterials. Der Vergleichmäßigungsabstand ergibt sich vorteilhaft aus dem Radius eines Kreises, durch den der äußere Umfang des Ventilatorrades in mindestens einer senkrecht zur Achse des Ventilators stehenden Ebene beschreibbar ist, mit einer Abweichung von max. 20 %. In der hier gezeigten Ausführungsform unterscheiden sich der Abstand des ersten Ventilators vom Festkörper 141 und der Abstand des zweiten Ventilators 135 vom Festkörper 141. Mit dieser Anordnung wird eine kompaktere Bauweise des Lüftungsgerätes erreicht. In weiteren Ausführungsformen des Lüftungsgerätes, die hier nicht gezeigt sind, sind die beiden Ventilatoren 125, 135 mit gleichem Abstand zum Festkörper angeordnet. Der Festkörper 141 in der gezeigten Ausführungsform besteht aus Cordierit. Cordierit verfügt ebenso wie weitere Silikatkeramiken über eine ausreichende Wärmeleitfähigkeit und hohe spezifische Wärmekapazität, die den Einsatz sowohl als Regenerator als auch als Rekuperator erlauben. Die Vielzahl von Kanälen 142 im Festkörper 141 weisen eine wabenartige Struktur mit einem hexagonalen Querschnitt auf. In weiteren Ausführungsformen des Lüftungsgerätes sind die Querschnitte der Kanäle rund oder auch rechteckig.

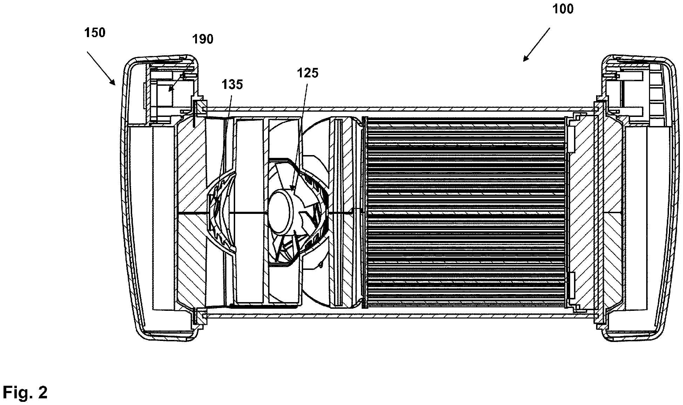

Fig. 2 zeigt das in Fig. 1 gezeigte Lüftungsgerät in einer Schnittebene senkrecht zur Schnittebene der Fig. 1. Neben den bereits in Bezug auf Fig. 1 erläuterten Bestandteilen des Lüftungsgerätes 100 ist in Fig. 2 zu erkennen, dass eine Steuereinheit 190 im innenraumseitigen Teilgehäuse 150 angeordnet ist. Diese Steuereinheit ist ausgebildet, auf den Empfang eines Steuersignals hin den ersten oder den zweiten Ventilator 125, 135 in einer durch das Steuersignal definierten Drehzahl und Drehrichtung in Betrieb zu setzen. Das Steuersignal kann dabei sowohl direkt am Lüftungsgerät beispielsweise durch einen Nutzereingabe erzeugt werden, aber auch der Empfang des Steuersignals beispielsweise von einer zentralen Steuerungseinrichtung ist möglich. Unterschiedliche Drehzahlen der Ventilatoren entsprechen dabei unterschiedlichen Volumenströmen des jeweiligen Luftstroms. Die Steuereinheit in der vorliegenden Ausführungsform ist ausgebildet, auf den Empfang eines entsprechenden Steuersignals hin, den ersten und den zweiten Ventilator 125, 135 in einem Gegentaktbetrieb mit entgegengesetzter Drehrichtung zu betreiben. Dies bedeutet, dass beispielsweise der erste Ventilator 125 Außenluft durch die erste Luftführungseinrichtung 120 in den Innenraum fördert, während der zweite Ventilator Innenluft durch die zweite Luftführungseinrichtung 130 nach außen fördert. Im Endlüftungstakt, hier des zweiten Ventilators 135, wird dem Abluftvolumenstrom durch den Wärmetauscher 140 Wärme entzogen. Diese Wärme wird teilweise an den gleichzeitig stattfindenden Zuluftstrom in der ersten Luftführungseinrichtung 120 übertragen. Wird die Drehrichtung der Ventilatoren nun umgedreht, so erfolgt im Beispiel in der zweiten Luftführungseinrichtung 130 im nächsten Takt eine Belüftung des Innenraums. In dieser Phase findet eine regenerative Wärmeübertragung der zuvor an den Wärmetauscher abgegebenen Wärme an den Zuluftstrom jetzt in der zweiten Luftführungseinrichtung 130 statt.

In weiteren Ausführungsformen ist die Steuereinheit zusätzlich ausgebildet, auf den Empfang eines entsprechenden Steuersignals hin den ersten und den zweiten Ventilator 125, 126 in einem Gleichtaktbetrieb mit gleicher Drehrichtung zu betreiben. In diesem Betriebsmodus ist es schneller ab- bzw. zu lüften über einen größeren Ab- oder Zuluftvolumenstrom möglich.

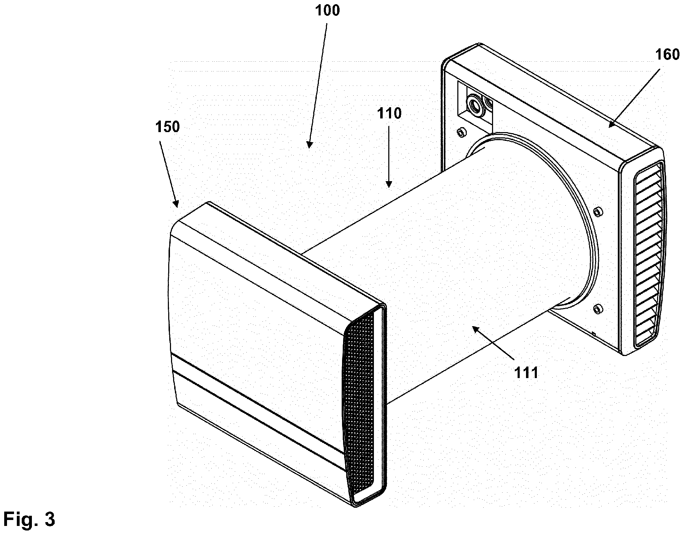

Fig. 3 zeigt eine perspektivische Ansicht des Lüftungsgerätes aus Fig. 1 und Fig. 2. In dieser Darstellung ist der Aufbau des gemeinsamen Gehäuses 110 aus einem Mittelteil 111 sowie dem innenraumseitigen Teilgehäuse 150 und dem außenseitigen Teilgehäuse 160 zu erkennen. Das Mittelteil 111 des Gehäuses 110 ist in der gezeigten Ausführungsform als Rohr ausgebildet. Das Rohr dient in dieser Ausführungsform als Mauerhülse für den Außenwandeinbau.

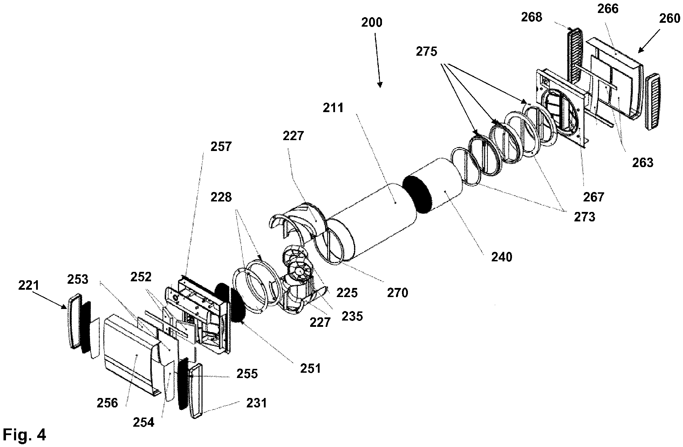

Fig. 4 zeigt ein weiteres Ausführungsbeispiel eines Lüftungsgerätes 200 zur Innenraumbelüftung gemäß der Erfindung in einer Explosionsdarstellung. Das Lüftungsgerät weist ein gemeinsames Gehäuse mit einem Mittelteil 211 in Form eines Rohres auf. Im Rohr ist ein Wärmetauscher 240 angeordnet. Darüberhinaus befindet sich innerhalb des Gehäuses in der gezeigten Ausführungsform ein Ventilatorgehäuse 227, in dem ein erster Ventilator 225 sowie ein zweiter Ventilator 235 angeordnet sind. Der erste Ventilator 225 ist dabei in einem ersten Strömungsraum 222 angeordnet, während der zweite Ventilator 235 in einem zweiten Strömungsraum 232 angeordnet ist. Unmittelbar angrenzend an das Ventilatorgehäuse 227 sind zwei Dichtungsringe 228 angeordnet, die die Luftführungseinrichtungen innerhalb des Lüftungsgerätes gegen den Außenraum abdichten. Angrenzend an den Wärmetauscher 240 sind weitere Dichtungen 270, 273 sowie verschiedene Adapterringe 275 angeordnet. Im innenraumseitigen Teilgehäuse 250, das den ersten und zweiten innenraumseitigen Auslass 221, 231 enthält, sind Schutzgitter 251 sowie Filter 252 und Isolierungen 253 angeordnet. In der gezeigten Ausführungsform weist das innenseitige Teilgehäuse 250 außerdem magnetische Verschlussfolien 254 auf, die von innen an einem metallischen Wabengitter 255 befestigt werden können. Mithilfe dieser Folien kann das Lüftungsgerät nach außen abgedichtet werden, beispielsweise im Falle eines Chemieunfalles und der Ansage "Bitte Fenster und Türen schließen". Das innenraumseitige Teilgehäuse verfügt außerdem über eine innenraumseitige Blende 256 sowie eine weitere Blende 257, die dem Mittelteil des Gehäuses zugewandt ist. Auch der außenseitige Auslass 260 verfügt über eine dem Freien zugewandte Blende 266 sowie eine dem Mittelteil des Gehäuses zugewandte weitere Blende 267. Des Weiteren sind auch im außenseitigen Teilgehäuse 260 Isolierungen 263 angeordnet. Die außenseitigen Auslässe sind mit Seitenabdeckungen 268 gegen das Eindringen von Fremdkörpern gesichert.

## Patentansprüche

1. Lüftungsgerät (100) zur Innenraumbelüftung, aufweisend in einem gemeinsamen Gehäuse (110)
- eine erste Luftführungseinrichtung (120) zur Führung eines ersten Luftstroms, die einen ersten innenraumseitigen Auslass (121), einen ersten Strömungsraum (122), in welchem wenigstens ein erster bidirektional betreibbarer Ventilator (125) angeordnet ist, und einen ersten außenseitigen Auslass (123) aufweist,
- eine von der ersten Luftführungseinrichtung fluidisch vollständig getrennte zweite Luftführungseinrichtung (130) zur Führung eines zweiten Luftstroms, die einen zweiten innenraumseitigen Auslass (131), einen zweiten Strömungsraum (132), in welchem wenigstens ein zweiter bidirektional betreibbarer Ventilator (135) angeordnet ist, und einen zweiten außenseitigen Auslass (133) aufweist,
- einen einstückigen Gas-Festkörper-Wärmetauscher (140), dessen Festkörper (141) sich in der ersten und in der zweiten Luftführungseinrichtung erstreckt, in beiden Luftführungseinrichtungen zwischen dem jeweiligen innenraumseitigen und dem außenseitigen Auslass angeordnet ist, eine Vielzahl von Kanälen (142) aufweist wobei der Festkörper (141) in der ersten und der zweiten Luftführungseinrichtung (120, 130) jeweils zusätzlich einen Regenerator bildet, wobei der erste und der zweite Strömungsraum sowie der Gas-Festkörper-Wärmetauscher (140) in einem gemeinsamen Mittelteil des Gehäuses (110) angeordnet sind,
- eine elektronische Steuereinheit (190) im Gehäuse, die ausgebildet ist, auf den Empfang eines Steuersignals hin den ersten oder den zweiten Ventilator in einer durch das Steuersignal definierten Drehzahl und Drehrichtung in Betrieb zu setzen, **dadurch gekennzeichnet, dass**
- der erste und der zweite innenraumseitige Auslass fluidisch vollständig getrennt in einem gemeinsamen innenraumseitigen Teilgehäuse (150) angeordnet sind sowie der erste und der zweite außenseitige Auslass fluidisch vollständig getrennt in einem gemeinsamen außenseitigen Teilgehäuse (160) angeordnet sind,
- der Gas-Festkörper-Wärmetauscher (140) ausgebildet ist, den ersten Luftstrom und den zweiten Luftstrom in einer jeweiligen Teilmenge von Kanälen (141) fluidisch getrennt, jedoch thermisch gekoppelt zu führen, und dass
- die elektronische Steuereinheit ausgebildet ist, entsprechend dem jeweiligen Steuersignal wahlweise
den ersten und den zweiten Ventilator in einem Gegentaktbetrieb mit entgegengesetzter Drehrichtung zu betreiben,
die Drehrichtung des ersten und des zweiten Ventilators nach einer vorbestimmten Taktzeit umzukehren, oder
den ersten und den zweiten Ventilator in einem Gleichtaktbetrieb mit gleicher Drehrichtung zu betreiben.

2. Lüftungsgerät nach Anspruch 1, bei dem der erste innenraumseitige Auslass und der zweite innenraumseitige Auslass seitlich auf einander gegenüberliegenden Seiten des innenraumseitigen Teilgehäuses angeordnet sind.

3. Lüftungsgerät nach Anspruch 1 oder 2, bei dem der erste außenseitige Auslass und der zweite außenseitige Auslass seitlich auf einander gegenüberliegenden Seiten des außenseitigen Teilgehäuses angeordnet sind.

4. Lüftungsgerät nach mindestens einem der vorstehenden Ansprüche, bei dem im Gehäuse unmittelbar angrenzend an den Festkörper mindestens eine Dichtung angeordnet ist, die für den ersten Luftstrom eine erste Durchflussöffnung aufweist, welche eine erste Teilmenge von Kanälen des Festkörpers freilegt, und die für den zweiten Luftstrom eine zweite Durchflussöffnung aufweist, welche eine zweite Teilmenge von Kanälen des Festkörpers freilegt

5. Lüftungsgerät nach mindestens einem der vorstehenden Ansprüche, bei dem der erste oder der zweite Ventilator oder der erste und der zweite Ventilator ein um eine Drehachse rotierbares Ventilatorrad aufweist, wobei die Drehachse schräg steht zu einer Längsausrichtung der Kanäle des Festkörpers.

6. Lüftungsgerät nach mindestens einem der vorstehenden Ansprüche, bei dem der der erste oder der zweite Ventilator oder der erste und der zweite Ventilator ein Axialventilator ist.

7. Lüftungsgerät nach Anspruch 6, bei dem der Axialventilator ein Ventilatorrad aufweist, dessen äußerer Umfang in mindestens einer senkrecht zur Achse des Ventilators stehenden Ebene durch einen Kreis beschreibbar ist und bei dem zwischen dem Ventilator und dem Festkörper ein Vergleichsmäßigungsabstand eingehalten ist, der mit einer Abweichung von maximal 20 % gleich dem Radius des Kreises ist.

8. Lüftungsgerät nach mindestens einem der vorstehenden Ansprüche, bei dem der Festkörper des Gas-Festkörper-Wärmetauschers aus Keramik ist.

9. Lüftungsgerät nach Anspruch 8, bei dem die Keramik eine Silikatkeramik, insbesondere Tonerdeporzellan oder Cordierit ist.

## Claims

1. Ventilation device (100) for indoor ventilation, having in a common housing (110)
- a first air-routing device (120) for routing a first airflow, which has a first indoor-side outlet (121), a first flow chamber (122), in which at least one first bi-directionally operable fan (125) is arranged, and a first outside outlet (123),
- a second air-routing device (130) for routing a second airflow, which is fluidically completely separate from the first air-routing device and has a second indoor-side outlet (131), a second flow chamber (132), in which at least one second bi-directionally operable fan (135) is arranged, and a second outside outlet (133),
- an integral gas-solid heat exchanger (140), the solid body (141) of which extends in the first and in the second air-routing device, is arranged in both air-routing directions between the respective indoor-side and the outside outlet, has a plurality of channels (142), wherein the solid body (141) additionally forms a respective regenerator in the first and the second air-routing device (120, 130), wherein the first and the second flow chamber and the gas-solid heat exchanger (140) are arranged in a common central part of the housing (110),
- an electronic control unit (190) in the housing, which is designed to set the first or the second fan in operation on receiving a control signal, with a speed and direction of rotation defined by the control signal,
**characterised in that**
- the first and the second indoor-side outlet are arranged fluidically completely separately in a common indoor-side sub-housing (150) and the first and the second outside outlet are arranged fluidically completely separately in a common outside sub-housing (160),
- the gas-solid heat exchanger (140) is designed to route the first airflow and the second airflow in a respective set of channels (141) in a fluidically separate but thermally coupled manner, and **in that**
- the electronic control unit is designed to, according to the respective control signal, optionally
operate the first and the second fan in a push-pull mode with an opposing direction of rotation,
reverse the direction of rotation of the first and the second fan after a predetermined cycle time, or
operate the first and the second fan in a common mode with the same direction of rotation.

2. Ventilation device according to claim 1, in which the first indoor-side outlet and the second indoor-side outlet are arranged laterally on mutually opposing sides of the indoor-side sub-housing.

3. Ventilation device according to claim 1 or 2, in which the first outside outlet and the second outside outlet are arranged laterally on mutually opposing sides of the outside sub-housing.

4. Ventilation device according to at least one of the preceding claims, in which at least one seal is arranged in the housing, immediately adjacent to the solid body, which seal has a first through-flow opening, exposing a first set of channels in the solid body, for the first airflow and which has a second through-flow opening, exposing a second set of channels in the solid body, for the second airflow.

5. Ventilation device according to at least one of the preceding claims, in which the first or the second fan or the first and the second fan has a fan wheel which is rotatable about an axis of rotation, wherein the axis of rotation is inclined with respect to a longitudinal alignment of the channels of the solid body.

6. Ventilation device according to at least one of the preceding claims, in which the first or the second fan or the first and the second fan is an axial fan.

7. Ventilation device according to claim 6, in which the axial fan has a fan wheel, the outer circumference of which may be described by a circle in at least one plane perpendicular to the axis of the fan and in which a homogenizing spacing, which is equal to the radius of the circle with a deviation of a maximum of 20%, is observed between the fan and the solid body.

8. Ventilation device according to at least one of the preceding claims, in which the solid body of the gas-solid heat exchanger is made of ceramic.

9. Ventilation device according to claim 8, in which the ceramic is a silicate ceramic, in particular alumina porcelain or cordierite.

## Revendications

1. Appareil (100) d'aération pour l'aération intérieure, ayant dans une armoire (110) commune
- un premier dispositif (120) de conduite de l'air pour conduire un premier flux d'air, qui a une première sortie (121) du côté intérieur, un premier espace (122) d'écoulement, dans lequel est disposé au moins un premier ventilateur (125) à fonctionnement bidirectionnel, et une première sortie (123) du côté extérieur,
- un deuxième dispositif (130) de conduite de l'air, entièrement séparé fluidiquement du premier dispositif de conduite de l'air, pour conduire un deuxième flux d'air, qui a une deuxième sortie (131) du côté intérieur, un deuxième espace (132) d'écoulement, dans lequel est monté au moins un deuxième ventilateur (135) à fonctionnement bidirectionnel, et une deuxième sortie (133) du côté extérieur,
- un échangeur de chaleur (140) gaz-solide d'une seule pièce, dont le solide (141) s'étend dans le premier et dans le deuxième dispositif de conduite de l'air, est monté dans les deux dispositifs de conduite de l'air entre la sortie du côté intérieur et la sortie du côté extérieur, a une pluralité de canaux (142), le solide (141) formant en outre un régénérateur respectivement dans le premier et le deuxième dispositif (120, 130) de conduite de l'air, le premier et le deuxième espaces d'écoulement ainsi que l'échangeur de chaleur (140) gaz-solide étant disposés dans une partie médiane commune de l'armoire (110),
- une unité (190) électronique de commande dans l'armoire, qui est constituée pour mettre en fonctionnement, à la réception d'un signal de commande, le premier ou le deuxième ventilateur à un régime et dans un sens de rotation définis par le signal de commande,
**caractérisé en ce que**
- la première et la deuxième sortie du côté intérieur sont montées complètement séparées fluidiquement dans une sous-armoire (150) commune du côté intérieur, tandis que la première et la deuxième sorties du côté extérieur sont montées complètement séparées fluidiquement dans une sous-armoire (160) commune du côté extérieur,
- l'échangeur de chaleur (140) gaz-solide est constitué pour conduire, de manière séparée fluidiquement mais couplée thermiquement, le premier flux d'air et le deuxième flux d'air dans un sous-ensemble respectif de canaux et **en ce que**
- l'unité électronique de commande est constituée pour faire fonctionner, conformément au signal de commande, au choix, le premier et le deuxième ventilateurs dans un fonctionnement en opposition ayant un sens de rotation opposé,
pour inverser le sens de rotation du premier et du deuxième ventilateur, après un temps défini à l'avance ou
pour faire fonctionner le premier et le deuxième ventilateurs suivant un fonctionnement de même sens ayant un même sens de rotation.

2. Appareil d'aération suivant la revendication 1, dans lequel la première sortie du côté intérieur et la deuxième sortie du côté intérieur sont disposées latéralement sur des côtés opposés l'un à l'autre de la sous-armoire du côté intérieur.

3. Appareil d'aération suivant la revendication 1 ou 2, dans lequel la première sortie du côté extérieur et la deuxième sortie du côté extérieur sont disposées latéralement sur des côtés opposés de la sous-armoire du côté extérieur.

4. Appareil d'aération suivant au moins l'une des revendications précédentes, dans lequel il est disposé dans l'armoire, au voisinage immédiat du solide, au moins une étanchéité, qui a, pour le premier flux d'air, une première ouverture de passage dégageant un premier sous-ensemble de canaux du solide et qui a, pour le deuxième flux d'air, une deuxième ouverture de passage dégageant un deuxième sous-ensemble de canaux du solide.

5. Appareil d'aération suivant au moins l'une des revendications précédentes, dans lequel le premier ou le deuxième ventilateur ou le premier et le deuxième ventilateurs a une roue de ventilateur pouvant tourner autour d'un axe de rotation, l'axe de rotation étant incliné par rapport à une direction longitudinale des canaux du solide.

6. Appareil d'aération suivant au moins l'une des revendications précédentes, dans lequel le premier ou le deuxième ventilateur ou le premier et le deuxième ventilateurs est un ventilateur axial.

7. Appareil d'aération suivant la revendication 6, dans lequel le ventilateur axial a une roue de ventilateur, dont le pourtour extérieur peut être décrit par un cercle dans au moins un plan perpendiculaire à l'axe du ventilateur et dans lequel, entre le ventilateur et la solide, est respectée une distance relative, qui, avec un écart de 20 % au maximum, est égale au rayon du cercle.

8. Appareil d'aération suivant au moins l'une des revendications précédentes, dans lequel le solide échangeur de chaleur gaz-solide est en céramique.

9. Appareil d'aération suivant la revendication 8, dans lequel la céramique est une céramique de silicate, notamment une porcelaine d'alumine ou de la cordiérite.
